Europäisches Patentamt

European Patent Office

Office européen des brevets

(19)

(11) Veröffentlichungsnummer: **0 058 377**
**A1**

(12) **EUROPÄISCHE PATENTANMELDUNG**

(21) Anmeldenummer: 82100931.3

(22) Anmeldetag: 09.02.82

(51) Int. Cl.³: **C 08 L 25/12**
**C 08 L 25/16**

(30) Priorität: **17.02.81 DE 3105653**

(43) Veröffentlichungstag der Anmeldung:
**25.08.82** Patentblatt **82/34**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Brandstetter, Franz, Dr.**
**45 Ritterbuechel**
**D-6730 Neustadt(DE)**

(72) Erfinder: **Hambrecht, Juergen, Dr.**
**Werderstrasse 30**
**D-6900 Heidelberg(DE)**

(72) Erfinder: **Jung, Rudolf H., Dr.**
**Liebenauer Strasse 132**
**D-6520 Worms(DE)**

(72) Erfinder: **Lindenschmidt, Gerhard, Dr.**
**Buchenweg 11**
**D-6906 Leimen(DE)**

(54) **Thermoplastische Formmassen.**

(57) Neue thermoplastische Formmassen aus einem Styrol-
und/oder α-Methylstyrol-Acrylnitril-Copolymerisat, einem
Polyamid auf Piperazin-Basis sowie gegebenenfalls üblichen
Zusatzstoffen.

EP 0 058 377 A1

BASF Aktiengesellschaft                    O.Z. 0050/034947

# Thermoplastische Formmassen

Die Erfindung betrifft neue thermoplastische Formmassen aus Styrol- bzw. ⌐-Methylstyrol-Acrylnitril-Copolymerisaten und einem Polyamid auf Piperazin-Basis.

Bekanntlich setzt man Styrolpolymerisaten zur Verbesserung der Verarbeitungseigenschaften Gleitmittel, wie Butylstearat, Paraffinöl, Zinkstearat oder Polyethylenwachs zu. In der DE-OS 29 16 668 werden thermoplastische Formmassen aus Styrol-Acrylnitril-Copolymerisaten beschrieben, die als Antistatika und Verarbeitungshilfsmittel Ethylenoxid-Propylenoxid-Zweiblockcopolymerisate enthalten. Als weitere Antistatika für ABS-Formmassen werden in der US-PS 3 625 915 Alkanolamine und in der GB-PS 1 335 685 Alkalicarboxylate in Kombination mit Alkyloxidpolymerisaten vorgeschlagen.

All diese Zusätze führen bei der Verwendung in Styrol--Acrylnitrilcopolymerisaten zu Formmassen mit mehr oder weniger guten Eigenschaften. In vielen Bereichen ist jedoch eine wesentlich verbesserte Fließfähigkeit der Styrol-Acrylnitrilcopolymerisate erwünscht, wobei aber die Transparenz erhalten bleiben soll und keine anderen nachteiligen Effekte, wie Ausblühen des Zusatzes, Verfärbungen und verminderte Zähigkeit auftreten dürfen.

Es bestand also die Aufgabe, thermoplastische Formmassen aus Styrol-Acrylnitril-Polymerisaten mit einer hohen Fließfähigkeit, Transparenz und belagfreier Oberfläche zu schaffen, wobei diese Formmassen nicht zu Verfärbungen neigen und keine verschlechterte Mechanik aufweisen sollten.

Vo/P

Diese Aufgabe wird durch die erfindungsgemäßen Formmassen gelöst, welche als Gleitmittel ein mit dem Styrol-Acrylnitril-Copolymerisat mischbares Polyamid enthalten.

Gegenstand der Erfindung sind somit thermoplastische Formmassen, bestehend im wesentlichen aus

(A) 80 bis 89,5, vorzugsweise 40 bis 85 Gew.-Teilen an Copolymerisaten von Styrol und/oder $\alpha$-Methylstyrol mit Acrylnitril, wobei diese Copolymerisate 25 bis 35 Gew.-% Acrylnitril einpolymerisiert enthalten,

(B) 0,5 bis 20, vorzugsweise 1 bis 10 Gew.-Teilen eines Polyamids, das gebildet wird aus

(a)   0 bis 18, vorzugsweise 8 bis 13 Gew.% Adipinsäure/Hexamethylendiamin-Salz und

(b)   100 bis 82, vorzugsweise 92 bis 87 Gew.% eines Salzes von Piperazin und einem Gemisch von Decandicarbonsäure und Azelainsäure im Molverhältnis 70 : 30 bis 95 : 5, vorzugsweise 80 : 20 bis 92 : 8 und gegebenenfalls

(c)   aus noch anderen Polyamid bildenden Ausgangsstoffen, sowie

(C) - gegebenenfalls - üblichen Zusatz- und/oder Hilfsstoffen in wirksamen Mengen, wobei die Summe der Gewichtsteile A und B gleich 100 ist.

Die in den erfindungsgemäßen Formmassen enthaltene Komponente (A) besteht aus einem oder mehreren kautschukfreien Copolymerisaten von Styrol und/oder $\alpha$-Methylstyrol mit Acrylnitril. Der Acrylnitril-Gehalt in diesen Copolymerisaten soll 25 bis 35 Gew.%, bezogen auf das jeweilige Copolymerisat, betragen.

Die Komponente (A) kann nach herkömmlichen Methoden, z.B. nach den Angaben der DE-AS 10 01 001 bzw. DE-PS 10 03 436 erhalten werden. So kann die Copolymerisation des Styrols und/oder $\alpha$-Methylstyrols mit dem Acrylnitril in Masse, Lösung, Suspension oder wäßriger Emulsion durchgeführt werden. Die Komponente (A) hat vorzugsweise eine Viskositätszahl von 40 bis 100, insbesondere von 50 bis 85 ml/g. Die Bestimmung der Viskositätszahl erfolgt analog DIN 53 726; dabei werden 0,5 g Material in 100 ml Dimethylformamid gelöst.

Die in den erfindungsgemäßen Formmassen enthaltene Komponente (B) ist ein Copolyamid auf der Basis von Piperazin. Es wird nach üblichen Methoden durch Schmelzpolykondensation der Komponenten bei 180 bis 300, vorzugsweise 200 bis 280°C, gegebenenfalls in Gegenwart von Spuren einer monofunktionellen Carbonsäure, wie Stearinsäure oder Propionsäure, als Molekulargewichtsregler, unter Abführung des Reaktionswassers hergestellt.

Als Cokomponenten kommen beispielsweise Adipinsäure/Hexamethylendiamin-Salz und andere Polyamid bildende Ausgangsstoffe, wie Dicarbonsäuren, $\omega$-Aminocarbonsäuren und Lactame infrage. Besonders bevorzugt ist ein Copolyamid aus 8 Gew.% Adipinsäure/Hexamethylendiamin-Salz und 92 Gew.% eines Salzes von Piperazin und einem Gemisch von Decandicarbonsäure und Azelainsäure im Molverhältnis 80 : 20.

Der K-Wert der Copolyamide, gemessen nach H. Fikentscher, Cellulosechemie 13 (1932), Seiten 58 bis 64 und 71 bis 74, bei 20°C in 1 %iger Lösung in 96 %iger Schwefelsäure, liegt im allgemeinen im Bereich von 35 bis 70, vorzugsweise 40 bis 65. Solche Copolyamide sind beispielsweise in der DE-PS 26 30 114 beschrieben.

Das Einarbeiten der Komponente (B) in die Copolymerisate (A) wird auf an sich bekannte Weise vorgenommen.

Die erfindungsgemäßen Mischungen aus den Komponenten (A) und (B) können als weitere Komponente (C) alle Zusatzstoffe und/oder Hilfsstoffe enthalten, wie sie beispielsweise für SAN-Polymerisate üblich und gebräuchlich sind. Als solche Zusatz- und/oder Hilfsstoffe seien beispielsweise genannt: Füllstoffe, weitere verträgliche Kunststoffe, Farbstoffe oder Pigmente, Antistatika, Antioxidantien, Flammschutzmittel und noch zusätzliche Gleitmittel. Die Zusatz- und Hilfsstoffe werden in üblichen und wirksamen Mengen, vorzugsweise in Mengen von 0,1 bis zu insgesamt etwa 30 Gew.%, bezogen auf die Mischung (A + B) eingesetzt.

Die Zusatzstoffe werden z.B. mit der Komponente B in die Komponente A eingearbeitet.

Es zeigte sich überraschend, daß die erfindungsgemäßen Formmassen eine hohe Zähigkeit und eine gute Fließfähigkeit besitzen und zu Fertigteilen mit belagfreier Oberfläche führen.

Die Erfindung wird anhand der nachstehenden Beispiele erläutert. Alle in den Beispielen genannten Teile und Prozente beziehen sich, wenn nichts anderes vermerkt ist, auf das Gewicht.

Beispiele und Vergleichsversuche

Für die folgenden Beispiele 1 bis 6 und Vergleichsversuche A bis G werden folgende Styrol-Acrylnitrilcopolymerisate verwendet:

Styrol-Acrylnitrilcopolymerisate

| Art | Gehalt an | | | |
| --- | --- | --- | --- | --- |
| | Styrol [Gew.-%] | $\alpha$-Methylstyrol [Gew.-%] | Acrylnitril [Gew.-%] | Viskositätszahl [ml/g] |
| I | 75 | - | 25 | 100 |
| II | 65 | - | 35 | 80 |
| III | - | 70 | 30 | 58 |
| IV | 80 | - | 20 | 100 |

Als Polyamidkomponente (B) wurde ein Copolyamid eingesetzt, das aus 8 Gew.-% Adipinsäure/Hexamethylendiamin-
-Salz und 92 Gew.-% Salz von Piperazin und einem Gemisch
von Decandicarbonsäure und Azelainsäure im Verhältnis
80:20 besteht und einen K-Wert von 50 aufweist.

Auf einem Mischextruder wurden die in der Tabelle angegebenen Gewichtsteile an Komponente (A) und Polyamid (B) und
im Falle der Vergleichsversuche einer weiteren Zusatzkomponente bei 250°C aufgeschmolzen, gemischt, homogenisiert
und granuliert.

Die Schlagzähigkeit wurde nach DIN 53 453 an bei 250°C
gespritzten Normkleinstäben bei 23°C und der Schmelzindex
nach DIN 53 735 ermittelt.

Zur Prüfung der Oberflächenbelagbildung durch ausdiffundierendes Gleitmittel an den Formteilen wurden bei 200°C
Preßplatten mit den Abmessungen 50 x 80 x 2 mm hergestellt. Die Preßplatten wurden bei 40°C in einer Tropenkammer gelagert. Nach bestimmten Zeiten wurde visuell
kontrolliert, ob sich ein Oberflächenbelag bildete.

Zur Beurteilung der Transparenz wurden bei einer Massetemperatur von 250°C und einer Formtemperatur von 30°C Rund- scheiben mit den Abmessungen 60 x 2 mm gespritzt. An diesen Formteilen wurde visuell die Transparenz überprüft (Note 1 glasklare Transparenz; Note 6 keine Transparenz).

Tabelle

| Beispiele (erfindungsgemäß) | Komponente A Styrol-Acrylnitril Copolymerisat [Gew.-Tle] | Art | Komponente B Polyamid [Gew.-Tle.] | Schmelzindex bei 21,5 kp 200°C [g/10 min] | Schlagzähigkeit [kJ/m$^2$] | Transparenz | Oberflächenbelag | Bemerkungen |
|---|---|---|---|---|---|---|---|---|
| 1 | 99 | I | 1 | 19 | 15,6 | 1 | nein | |
| 2 | 95 | I | 5 | 21 | 22,2 | 1 | nein | |
| 3 | 99 | II | 1 | 30,3 | 15,2 | 1 | nein | |
| 4 | 95 | II | 5 | 36,6 | 14,9 | 1 | nein | |
| 5 | 99 | III | 1 | 11 | 14,4 | 1 | nein | |
| 6 | 95 | III | 5 | 14 | 14,8 | 1 | nein | |

Vergleichsversuch (nicht erfindungsgemäß)

| | | | | | | | | |
|---|---|---|---|---|---|---|---|---|
| A | 99 | IV | 1 | 20 | 13,7 | 3 | nein | |
| B | 95 | IV | 5 | 20 | 13,9 | 5 | nein | |

| | | | Gleitmittel Art [Gew.-%] | | | | | |
|---|---|---|---|---|---|---|---|---|
| C | 99 | I | (a) 1 | 23 | 15,2 | 1 | nein | |
| D | 99 | II | (b) 1 | 12 | 14,8 | 1 | nein | starke Gelbfärbung |
| E | 100 | I | — — | 10 | 15,2 | 1 | nein | |
| F | 100 | II | — — | 24 | 15,0 | 1 | nein | |
| G | 100 | III | — — | 4 | 14,9 | 1 | nein | |

(a) Ethylenoxid-Propylenoxid-Dreiblockcopolymerisat (vgl. Beispiel 5 DE-OS 29 16 668)

(b) Bistearylamid des Ethylendiamins.

**0058377**

Patentanspruch

Thermoplastische Formmassen, enthaltend

(A)  80 bis 99,5 Gew.-Teile an Copolymerisaten von Styrol und/oder $\alpha$-Methylstyrol mit Acrylnitril, wobei diese Copolymerisate 25 bis 35 Gew.% Acrylnitril einpolymerisiert enthalten

(B)  0,5 bis 20 Gew.-Teile eines Polyamids, das gebildet wird aus

  (a)  0 bis 18 Gew.% Adipinsäure/Hexamethylendiamin- -Salz und

  (b)  100 bis 82 Gew.% eines Salzes von Piperazin und einem Gemisch von Decandicarbonsäure und Azelainsäure im Molverhältnis 70 : 30 bis 95 : 5 und gegebenenfalls

  (c)  aus noch anderen Polyamid bildenden Ausgangs- -stoffen, sowie

(C)  - gegebenenfalls - übliche Zusatz- und/oder Hilfs- -stoffe in wirksamen Mengen, wobei die Summe der Gewichtsteile A und B gleich 100 ist.

# 0058377

## EUROPÄISCHER RECHERCHENBERICHT

Nummer der Anmeldung

EP 82 10 0931

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | PATENTS ABSTRACTS OF JAPAN, Band 3, Nr. 87(C53), 25. Juli 1979, Seite 54C53<br>& JP - A - 54 063 149 (SUMITOMO) 21-05-1979 * Zusammenfassung * <br><br>----- | 1 | C 08 L 25/12<br>C 08 L 25/16 |

RECHERCHIERTE SACHGEBIETE (Int. Cl. 3)

C 08 L

Der vorliegende Recherchenbericht wurde für alle Patentansprüche erstellt.

| Recherchenort | Abschlußdatum der Recherche | Prüfer |
|---|---|---|
| DEN HAAG | 17-05-1982 | FOUQUIER J.P. |

EPA Form 1503. 03.82